# EUROPEAN PATENT APPLICATION

(11) **EP 1 435 374 A2**
(43) Date of publication of application: **07.07.2004**
(21) Application number: 03029133.0
(22) Date of filing: 18.12.2003
(51) Int. Cl.: C08K 13/02, A41D 19/00

(54) **Accelerator free nitrile gloves**

(30) Priority: 06.01.2003 US 437992 P; 26.02.2003 US 373198
(71) Applicant: Microflex Corporation, Reno, Nevada 89523 (US)
(72) Inventor: Tao, Jian, Reno, Nevada 89523 (US); Webster, Carrie, Reno, Nevada 89503 (US)
(74) Representative: Basfeld, Rainer, Dr. Dipl.-Phys.

(57) **Abstract**

The invention is directed to a new formulation for making a carboxylated polyacrylonitrile butadiene (usually referred to as nitrile in the glove industry) glove. The new formulation contains no accelerators commonly used in sulfur vulcanization. A sulfur free (including organic sulfur donors) crosslinking system is utilized. The invention provides formulations to make compounds and methods to make such gloves. The new formulations and procedures could be easily realized economically under common glove production lines. Depending on the desired applications, both powdered and powder free gloves are produced in the same formula.

## Description

### BACKGROUND OF THE INVENTION

Due to the latex protein allergy prevalent in the glove industry, nitrile has been the most widely used synthetic alternative to natural rubber latex over the last decade. The art of making nitrile thin wall gloves has been long established as disclosed by U.S. Patent Number 5,014,362 (Tillotson et al). Traditionally, nitrile gloves have been stiff and they are not as comfortable as natural rubber latex gloves. Much research and development has been undertaken since the disclosure of Tillotson et al.

For example, (U.S. Patent Number 6,031,042) (Lipinski) discloses a formula to lower the modulus so that the glove can be softer. U.S. patent Number 6,451,893 (Tao) teaches the methodology of increasing relaxation to give the nitrile glove a natural rubber like feeling. Performance wise, today's nitrile gloves are somewhat comparable to their natural counterpart.

However, adversary reaction due to chemicals, especially the by products of accelerators after vulcanization, has caused increasing concerns lately. The so-called Type IV allergy has arisen in both natural rubber latex and nitrile gloves, as well as in all the gloves that utilize a sulfur (or organic sulfur donors) vulcanization system including polychloroprene, polyisoprene, and the like.

In a conventional sulfur vulcanization system, usually there are three components: sulfur; primary activator; and secondary accelerators, regardless of the rubber materials, natural rubber latex, carboxylated nitrile, polychloroprene, or synthetic polyisoprene.

Sulfur, the cross linker, is the core of the system. Sulfur alone would work, but curing requires fairly high temperatures and long time periods. Additionally, the product property consistency is questionable.

To speed up the process and improve quality consistency, hundreds of chemicals were used. ZnO is the most important one, which is called the primary activator. This is essentially true for most rubbery materials, except for carboxylated nitrile, in which the function of ZnO is two fold. In addition to primary activator for sulfur cross linking, it also acts as ionic cross linker between carboxylated groups.
U.S. patent publication number 20020114943 (Warneke et. al.) relates to an elastomeric glove wherein the glove, during production, is cross-linked using a metal oxide(alone) as a cross-linking agent. The polymer is cross-linked without using conventional sulfur containing cross-linking agents. Or accelerators. No contemplation of the use of peroxides is even remotely contemplated in the publication.

Usually, there is not much variation in sulfur or ZnO in typical formulations, although organic sulfurs can be used to replace sulfur in some rare cases. However, organic sulfur donors are often considered one of the secondary accelerators. Over the past years, hundreds of chemicals were utilized as secondary accelerators, many of which fall into four categories: amines; dithiocarbamets; thiurams; and thiozoles. In dipping applications, cross linking should progress as fast as possible without scorching worries. But some applications such as mold injection need cross linking to occur at pecific stages of processing. Different secondary accelerators are desirable.

It is some of the by products of these secondary accelerators after vulcanization that potentially cause skin irritations to sensitive people.

A safer glove that is free of accelerators (Type IV allergy) is desired.

It is an objective of the present invention for rubber to be cross-linked to have certain mechanical strength. Sulfur vulcanization has been the most widely used system because it does provide the desired mechanical strength at lowest cost.

Safer cross-linking systems do exist, such as peroxides crosslinking systems used in EPDM rubber compounds. These systems have been mainly used for mold injection rubber products applications. The crosslinking occurred in nonaqueous, air tight, oxygen free environments.

### SUMMARY OF THE INVENTION

This invention describes methods and formulations to make nitrile gloves using a peroxides cross linking system in an aqueous open air dipping process, in combination with the use of zinc oxide (ZnO).

Without accelerators, the sulfur vulcanization system will still work, by providing more heat or reducing film thickness. Under normal conditions, the gloves will be undercured.

### DETAILED DESCRIPTION OF INVENTION

As aforementioned, the carboxylated polyacrylonitrile butadiene must be crosslinked to have sufficient mechanical strength, like many typical rubbery materials. Introduced by Goodyear in 1839, the sulfur vulcanization system is still the most popular one which is widely used in the rubber industry It has been evolving over time.

One of severe drawbacks of a sulfur cross linking system is to require extensive heating either by prolonged heating or by the use of very high temperatures. To overcome this, many acceleration systems have been discovered.

Zinc oxide (ZnO) is used all sulfur vulcanization formulas. It is the primary activator. In carboxylated polyacrylonitrile butadiene rubber crosslinking, ZnO has an additional function, providing ionic crosslinking between carboxylated groups.

Depending on applications and processing conditions, many secondary accelerators have been used in combination with ZnO. Here are several families of commonly used accelerators in the glove industry: dithiocarbamates, thiurams, thiozoles, etc.

Some accelerators such as thiurams can be used without sulfur at all because they can decompose to produce sulfur radicals as crosslinking agents alone. They are so called organic sulfur donors. Because generate sulfur radicals at much lower temperatures than inorganic sulfur, they are also used as accelerators. Usually organic sulfur donors are much more expensive than inorganic sulfur.

It is the byproducts of these secondary accelerators after vulcanization that cause skin irritations.

Peroxide is another family of crosslinking agents for EPDM rubbery compounds, which has been widely accepted for medical devices. Their byproducts have been proven to be safe. Usually, they are used in applications such as mold injection. They are in an airtight oxygen free environment during rubber processing, where efficient crosslinking would ensure the desired physical properties.

In general, they can decompose to generate oxygen radicals to crosslink double bonds in rubber at much lower temperatures than sulfur, just like organic sulfur donors.

Peroxides are used to make thin wall gloves. In an open-air aqueous dipping process, peroxide alone would not produce the desired physical properties to meet ASTM requirements.

### Example 1 - Compounding formula: peroxide alone

| **Ingredients** | **PHR** |
|---|---|
| Carboxylated polyacrylonitrile butadiene | 100 |
| Zinc Oxide | 0 |
| 2,5-dimethyl-2,5-di(t-butylperoxy)hexane | 2 |
| Phenolic antioxidant | 2 |
| Titanium Dioxide | 0.5 |
| Potassium hydroxide | 1 |
| Water | To desire viscosity |

Here are some curing conditions:

| Curing Conditions | Temperature (°F) | Duration (minutes) |
|---|---|---|
| Film 1-1 | 250 | 30 |
| Film 1-2 | 350 | 20 |
| Film 1-3 | 350 | 30 |

Here are their physical properties (thickness - 0.10 mm):

| Samples | 300% Modulus (Mpa) | Ultimate Elongation (%) | Tensile Strength (MPa) | Puncture Strength (N) |
|---|---|---|---|---|
| Film 1-1 | 1.82 | 690 | 13.13 | 10.2 |
| Film 1-2 | 2.06 | 695 | 12.32 | 10.8 |
| Film 1-3 | 2.52 | 630 | 12.91 | 8.2 |

Clearly the films are under cured. The tensile strength is below 14 MPa, which is the ASTM requirement for a medical glove. In terms of curing degree, Film 1-1 and 1-2 are similar. More heat was given to film 1-3, but the tensile strength did not improve. Instead, the films have a very poor cosmetic appearance, (yellowish and even brownish.) The formula was changed to increase the peroxide content. This change had little impact on tensile strength improvement, which always averaged below 14 MPa.

Peroxide alone will not work for a carboxylated nitrile compound.

As previously stated, the ZnO will react with carboxylated groups at room temperatures to result in ionic crosslinking. This alone will not yield satisfactory physical properties.

### Example 2 - Compounding formula: ZnO alone

| **Ingredients** | **PHR** |
|---|---|
| Carboxylated polyacrylonitrile butadiene | 100 |
| Zinc Oxide | 2 |
| 2,5-dimethyl-2,5-di(t-butylperoxy)hexane | 0 |
| Phenolic antioxidant | 2 |
| Titanium Dioxide | 0.5 |
| Potassium hydroxide | 1 |
| Water | To desire viscosity |

Films were cured at about 250°F for about 30 minutes, as usual. Here are the physical properties (thickness - 0.10 mm):

| Samples | 300% Modulus (Mpa) | Ultimate Elongation (%) | Tensile Strength (MPa) | Puncture Strength (N) |
|---|---|---|---|---|
| Film 2-1 | 11.62 | 441 | 24.67 | 11.0 |

In contrast to films, which solely use peroxide, where tensile strength does not meet ASTM standards, ZnO cross-linked films show ideal tensile strength, approximately 25 MPa or approximately 3,500 psi, far above ASTM requirements. But, on the other hand, the elongation of the product falls under ASTM requirements.

Where ZnO amounts are lowered or the temperature is lowered, elongation will improve, but tensile strength will suffer.

From examples 1 and 2, a formulation combining peroxide, which yields high elongation but low tensile strength, and ZnO, which produces high tensile strength but low elongation, was produced.

In this invention, a formula is described that combines ZnO and peroxide to produce a thin wall nitrile glove that possesses desired and balanced physical properties meeting ASTM requirements.

### Example 3 - Compounding formula: ZnO + Peroxide:

| **Ingredients** | **PHR** |
|---|---|
| Carboxylated polyacrylonitrile butadiene | 100 |
| Zinc Oxide | 1 |
| 2,5-dimethyl-2,5-di(t-butylperoxy)hexane | 1.5 |
| Phenolic antioxidant | 0.75 |
| Titanium Dioxide | 0.5 |
| Potassium hydroxide | 1 |
| Water | To desired viscosity |

A comparison of all three films made with the three formulations under the same curing conditions, about 250 F for about 30 minutes and almost identical thickness, 0.10 mm:

| Samples | 300% Modulus (Mpa) | Ultimate Elongation (%) | Tensile Strength (MPa) | Puncture Strength (N) |
|---|---|---|---|---|
| Film 3-1 | 5.14 | 529 | 25.27 | 11.0 |
| Film 2-1 | 11.62 | 441 | 24.67 | 11.0 |
| Film 1-1 | 1.82 | 690 | 13.13 | 10.2 |

Film 1-1 is very elastic, very low modulus, very high elongation but very low tensile strength, too. On the other hand, Film 2-1 is strong, i.e., high tensile strength, but also stiff, a typical nitrile, high modulus and low elongation. Film 3-1 is the ideal hybrid, with neutralized modulus and elongation, yet, whose tensile strength remains strong. Film 3-1 has ideal balanced properties.

Films made by Formula 3, the combination of peroxide and ZnO are depicted in the following table. Different thickness was controlled by coagulant concentration.

| Samples | Thickness (mil) | Thickness (mm) |
|---|---|---|
| Film 3-1 | 3.94 | 0.10 |
| Film 3-2 | 3.15 | 0.08 |
| Film 3-3 | 2.36 | 0.06 |

### Mechanical properties:

| Samples | 300% Modulus (Mpa) | Ultimate Elongation (%) | Tensile Strength (MPa) | Puncture Strength (N) |
|---|---|---|---|---|
| Film 3-1 | 5.14 | 529 | 25.27 | 11.0 |
| Film 3-2 | 5.13 | 514 | 21.49 | 8.0 |
| Film 3-3 | 5.09 | 533 | 23.54 | 5.7 |

Tensile strength and modulus are normalized by thickness. Hence, the characteristics of the film don't substantially change with thickness.

Puncture strength, an absolute number, is highly dependent on thickness. However, even at the lowest thickness, the puncture strength of the film is a decent number and acceptable. Natural rubber latex gloves with normal thickness (0.10 mm) have a puncture strength of between 4 and 5 N. A typical vinyl glove with a thickness of 0.10 mm would average about 2 N. the films described by the invention, thinner nitrile films at a thickness of 0.06 mm, which is not compromised on barrier integrity, have significantly better puncture strength. In addition, they provide better tactic sensation and dexterity.

The gloves age well and the aged tensile strength is about 28.66 MPa, while the elongation is 555%, which meets ASTM standards.

## Claims

1. A formulation for producing a nitrile glove comprising carboxylated polyacrylonitrile butadiene and a combination of an effective amount of peroxides and zinc oxide as the cross-linking component.

2. The formulation as claimed in claim 1, wherein the cross-linking component is free of elemental sulfur and organic sulfur donors.

3. The formulation as claimed in claim 1, wherein a film thickness of the nitrile glove is from 2 to 5 mils.

4. The formulation as claimed in claim 1, wherein the glove has a tensile strength above 20 MPa and an elongation higher than 500%.

5. The formulation as claimed in claim 1, wherein the peroxide is 2,5-dimethyl-2,5-di(t-butylperoxy) hexane.

6. A thin wall sulfur free nitrile glove comprising effective amounts of:
a) carboxylated polyacrylonitrile butadiene,
b) zinc oxide,
c) 2,5-dimethyl-2,5-di(t-butylperoxy)hexane,
d) a phenolic antioxidant,
e) titanium dioxide,
f) potassium hydroxide and
g) water.

7. The thin wall sulfur free nitrile glove as claimed in claim 6, wherein the glove has a thickness of from 2 to 5 mils.

8. The thin wall sulfur free nitrile glove as claimed in claim 6, wherein the glove has a tensile strength above 20 MPa and an elongation greater than 500%.
